# FASCICULE DE BREVET EUROPEEN

(11) **EP 3 097 341 B1**
(45) Date de publication et mention de la délivrance du brevet: **19.09.2018**
(21) Numéro de dépôt: 14814961.0
(22) Date de dépôt: 26.11.2014
(51) Int. Cl.: F17C 13/02

(54) **ROBINET POUR BOUTEILLE DE FLUIDE SOUS PRESSION ET BOUTEILLE CORRESPONDANTE**
VENTIL FÜR UNTER DRUCK STEHENDE FLUIDZYLINDER UND ENTSPRECHENDER ZYLINDER
VALVE FOR PRESSURIZED FLUID CYLINDER AND CORRESPONDING CYLINDER

(30) Priorité: 22.01.2014 FR 1450526
(43) Date de publication de la demande: 30.11.2016
(73) Titulaire: L'Air Liquide Société Anonyme pour l'Etude et l'Exploitation des Procédés Georges Claude, 75007 Paris (FR)
(72) Inventeur: CARRON, Amélie, 94340 Joinville le Pont (FR); LOPEZ, Beatriz, F-75016 Paris (FR); REZEL, Christophe Roland, F-91600 Savigny sur Orge (FR); RUDNIANYN, Philippe, F-91700 Villiers Sur Orge (FR); VIVIER, Catherine, F-38120 Saint-Egreve (FR)
(74) Mandataire: De Cuenca, Emmanuel Jaime
(86) Numéro de dépôt international: PCT/FR2014/053045
(87) Numéro de publication internationale: WO 2015/110718

(56) Documents cités:
- EP-A2- 2 339 222
- WO-A2-2012/164240
- GB-A- 2 486 018
- US-A1- 2004 045 608
- US-A1- 2005 103 342
- US-A1- 2008 150 739
- US-A1- 2010 245 098

## Description

La présente invention concerne un robinet pour bouteille de fluide sous pression ainsi qu'une bouteille correspondante.

L'invention concerne plus particulièrement un robinet pour bouteille de fluide sous pression comprenant un corps muni d'une extrémité destinée à être montée dans l'orifice d'une bouteille de fluide sous pression, le corps du robinet abritant un premier circuit de soutirage comprenant une première extrémité amont destinée à communiquer le volume de stockage d'une bouteille de fluide sous pression et une seconde extrémité aval destinée à être raccordée à un organe utilisateur du gaz soutiré, le premier circuit de soutirage comprenant un organe de régulation du débit et/ou de la pression du fluide soutiré entre les extrémités amont et aval, le robinet comprenant un organe de commande manuelle de l'organe de régulation, l'organe de commande étant monté mobile relativement au corps du robinet et coopérant avec l'organe de régulation pour contrôler le débit et/ou la pression de fluide admis à circuler de l'extrémité amont vers l'extrémité aval selon la position de l'organe de commande par rapport au corps, le robinet comprenant un dispositif électronique d'indication de donnée(s) relative(s) au contenu de fluide dans une bouteille raccordée au robinet, le dispositif électronique d'indication comprenant un organe d'acquisition de stockage et de traitement de données et au moins un afficheur de données relié à l'organe d'acquisition de stockage et de traitement de données, le robinet comportant un capteur de position de l'organe de commande manuelle de l'organe de régulation, le capteur de position étant relié à l'organe d'acquisition de stockage et de traitement de données pour transmettre à ce dernier un signal représentatif du débit et/ou la pression de fluide imposé par l'organe de régulation, l'organe d'acquisition de stockage et de traitement de données étant configuré, en réponse à la réception de ce signal de débit et/ou de pression imposé, pour commander l'affichage sur l'afficheur d'une information relative au mode d'utilisation du robinet et en particulier au contenu de fluide et/ou à la quantité de fluide soutiré, le robinet comportant un capteur de pression destiné à mesurer la pression au sein du volume de stockage d'une bouteille de fluide raccordée au robinet, le capteur de pression étant relié à l'organe d'acquisition de stockage et de traitement de données pour transmettre à ce dernier un signal représentatif de la pression de fluide mesurée.

L'invention concerne un robinet pourvu d'un dispositif électronique d'indication de données physiques relatives au contenu d'une bouteille de fluide sous pression notamment du gaz sous pression. L'invention concerne notamment un dispositif dit de manomètre électronique et digital. On pourra se référer par exemple au document FR2868160A1 qui décrit un exemple de tel dispositif.

Un tel dispositif comprend un capteur de pression et une logique électronique qui calcule et affiche des données de quantité de fluide et/ou d'autonomie.

Pour calculer et afficher une telle information fiable d'autonomie le dispositif doit réaliser plusieurs mesures de pression successives avant d'évaluer le débit sélectionné par l'utilisateur du robinet. Ceci génère un temps de calcul qui ne permet pas d'afficher de façon immédiate une autonomie ou de débit de soutirage sélectionné. Un temps de trente à soixante secondes peut par exemple être nécessaire. De plus, ce dispositif a également un temps de réaction identique en cas de changement des paramètres de soutirage (changement du débit de soutirage sélectionné...).

Le document WO2012164240A2 décrit un tel dispositif qui utilise la détection de la position du sélecteur de débit.

Le robinet est utilisé pour alimenter en oxygène un ventilateur médical (débit de soutirage imposé par le ventilateur), le signal de pression mesuré par le manomètre subit une oscillation en phase avec les phases de ventilation. Du fait de la grande variété des modes de ventilation, il est difficile de calculer ou d'afficher une information pertinente.

Ces dispositifs ne permettent par ailleurs pas de signaler et de gérer certaines situations à risque, notamment lorsque l'utilisateur sélectionne de façon imparfaite un débit de soutirage via l'organe de commande manuelle ou en cas d'erreur de calcul de l'autonomie dû à une fuite ou un autre problème technique.

Un but de la présente invention est de pallier tout ou partie des inconvénients de l'art antérieur relevés ci-dessus.

A cette fin, le robinet selon l'invention dans lequel l'organe d'acquisition de stockage et de traitement de données est configuré pour recevoir à la fois le signal de pression mesurée du capteur de pression et le signal de débit et/ou de pression fourni par le capteur de position et pour calculer, par ailleurs conforme à la définition générique qu'en donne le préambule ci-dessus, est essentiellement caractérisé en ce, qu'il est configuré pour en réponse, à une valeur de quantité de fluide restante et/ou soutirée à partir de ces deux signaux, l'organe d'acquisition de stockage et de traitement de données étant configuré pour :
- calculer une valeur de quantité de fluide restante et/ou soutirée réelle sur la base de la mesure de pression du capteur de pression,
- calculer une valeur de quantité de fluide restante et/ou soutirée théorique sur la base de la régulation imposée par l'organe de régulation et mesurée par la position de l'organe de commande,
- comparer ladite valeur réelle basée sur la mesure du capteur de pression avec la valeur théorique imposée par l'organe de régulation et,
générer un signal d'alerte en cas de divergence entre ces valeur réelle et théorique supérieure à un seuil de sécurité déterminé.

Ceci permet d'indiquer rapidement et automatiquement à l'utilisateur que du gaz est soutiré, soit du fait d'une alimentation vers un ventilateur médical, soit du fait d'une fuite.

Par ailleurs, des modes de réalisation de l'invention peuvent comporter l'une ou plusieurs des caractéristiques suivantes :
- la valeur de quantité de fluide restante et/ou soutirée comprend au moins l'une parmi : la pression du fluide, la quantité massique ou volumique de fluide, l'autonomie de fluide restante dans la bouteille, la variation de quantité ou de pression de fluide dans la bouteille, le débit de fluide soutiré, l'autonomie de fluide restant en quantité, l'autonomie temporelle de fluide restant à un débit de soutirage déterminée,
- le seuil de sécurité correspond à une divergence de 15 à 35% et de préférence de 25% entre les valeurs réelle et théorique,
- l'organe d'acquisition de stockage et de traitement de données est configuré pour calculer l'autonomie théorique de fluide restant à partir de la pression initiale mesurée, de la diminution temporelle théorique de pression ou de la quantité de gaz générée par le débit et/ou la pression de soutirage imposé par l'organe de régulation, et pour calculer l'autonomie réelle de fluide restant à partir de la pression initiale mesurée et de la diminution temporelle réelle de pression ou de la quantité de gaz mesurée par le capteur de pression,

- l'organe d'acquisition de stockage et de traitement de données est configuré pour calculer une information d'autonomie ou de contenu de fluide sur un intervalle de temps déterminé compris entre une seconde et dix minutes et de préférence entre deux secondes et une minute, à partir de la pression courante et de la diminution temporelle théorique de pression ou de la quantité de gaz imposée par l'organe de régulation,
- l'organe d'acquisition de stockage et de traitement de données est configuré pour calculer une valeur d'autonomie ou de contenu de fluide sur un intervalle de temps déterminé compris entre trente secondes et dix minutes et de préférence entre une minute et six minutes à partir du signal de pression mesuré par le capteur de pression,
- l'organe d'acquisition de stockage et de traitement de données est configuré pour relever la pression mesurée par le capteur de pression pendant une durée comprise entre 1ms (milliseconde) et 100ms toutes les 5s (seconde) à 60s,
- l'organe d'acquisition de stockage et de traitement de données est configuré pour relever la position de l'organe (5) de commande manuelle mesurée par le capteur de position pendant une durée comprise entre 1ms et 50 ms, toutes les 1 à 20 secondes,
- la valeur d'autonomie ou de contenu théorique de fluide restant dans la bouteille est exprimée en temps restant (respectivement en quantité restante) en divisant la pression initiale mesurée par le capteur de pression (ou respectivement, une quantité du gaz courante), par la variation de pression théorique imposée par l'organe de régulation (respectivement la variation de quantité imposée par l'organe de régulation), selon une formule du type : Temps restant=Pression initiale/variation de pression imposée (ou respectivement : Temps restant=quantité restante/variation de quantité imposée), la quantité étant estimée via l'équation des gaz parfait (PV=nRT) ou réels (PV=nZRT) (unités S.I.), avec P la pression mesurée, V le volume connu de la bouteille, n la quantité , R la constante des gaz parfaits et T la température mesurée ou approximée à la température ambiante mesurée, Z le facteur de compressibilité connu par tableau ou calculé,
- l'organe d'acquisition de stockage et de traitement de données est configuré pour recalculer et éventuellement afficher automatiquement une mise à jour de la valeur d'autonomie ou de contenu de fluide à la réception d'un signal du capteur de position indiquant un changement débit et/ou de la pression de fluide imposé par l'organe de régulation via l'organe de commande,
- le capteur de position de l'organe de commande comprend au moins l'un parmi : un capteur capacitif, un capteur magnétique, un capteur mécanique,
- au moins l'un des composants et notamment l'un des capteurs (de position, de pression) est du type électrique et alimenté par une pile et/ou un système inductif, ledit au moins un composant pouvant être alimenté de façon non continue pour économiser de l'énergie, l'organe d'acquisition de stockage et de traitement de données peut être configuré pour assurer cette alimentation électrique au moment d'une mesure.

L'invention concerne également un bouteille de fluide sous pression comprenant un robinet selon l'une quelconque des caractéristiques ci-dessus ou ci-après.

Selon une particularité possible après un remplissage de la bouteille et avant un premier soutirage, l'organe d'acquisition de stockage et de traitement de données est configuré pour commander l'affichage sur l'afficheur d'une information fixe relative au contenu de fluide dans la bouteille tant que le capteur de position n'a pas transmis un signal représentatif d'un débit et/ou la pression de fluide soutiré du réservoir pendant une durée déterminée et/ou correspondant à une quantité déterminée de fluide..

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de côté, schématique et partielle, illustrant un robinet monté sur une bouteille de gaz sous pression selon un exemple de possible de réalisation de l'invention,
- la figure 2 illustre de façon schématique et partielle, la structure et le fonctionnement d'une partie du robinet de la figure 1,
- les figures 3 à 5 illustrent de façon schématique et partielle, la structure et le fonctionnement de respectivement trois exemples de capteurs de position d'un robinet selon l'invention,
- la figure 6 représente schématiquement deux courbes illustrant des exemples de signaux générés par un ou des capteurs de position de la figure 5,
- les figures 7 et 8 illustrent de façon schématique et partielle, la structure et le fonctionnement de respectivement, un quatrième exemple et un cinquième exemple de capteur de position du robinet selon l'invention,
- la figure 9 représente schématiquement un exemple de courbe de pression mesurée en fonction du temps.

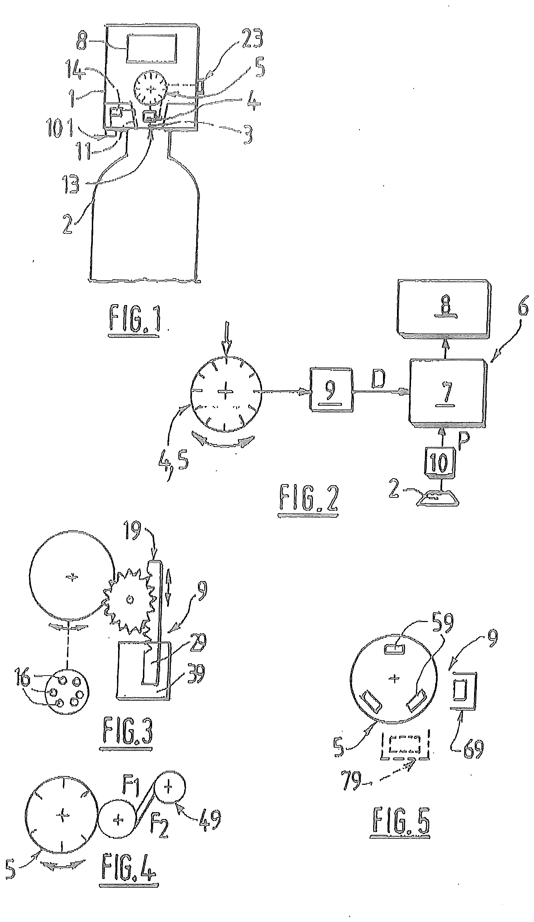

La figure 1 représente schématiquement une bouteille 2 de gaz sous pression munie d'un robinet 1 susceptible de mettre en oeuvre l'invention.

Le robinet 1 comprenant un corps muni d'une extrémité destinée à être montée dans l'orifice d'une bouteille 2 de fluide sous pression (par exemple par vissage).

Classiquement, le corps du robinet 1 abrite un premier circuit 3 de soutirage comprenant une première extrémité 13 amont communiquant avec le volume de stockage de la bouteille 2. Le circuit 3 de soutirage comprend une seconde extrémité 23 aval destinée à être raccordée à un organe utilisateur du gaz soutiré (par exemple un patient dans le cas d'oxygène ou d'un autre gaz médical).

Le premier circuit 3 de soutirage comprend un organe 4 de régulation du débit et/ou de la pression du fluide soutiré entre les extrémités amont 13 et aval 23. Cet organe 4 de régulation est par exemple un régulateur de débit à orifices calibrés 16 permettant de sélectionner un débit de gaz soutiré (cf. la représentation schématiquement de la figure 3). Bien entendu tout autre organe de régulation peut être envisage, par exemple une vanne à ouverture proportionnelle.

Le robinet 1 comprend un organe 5 de commande manuelle de l'organe 4. L'organe 5 de commande est monté mobile relativement au corps du robinet 1 et coopère avec l'organe 4 de régulation pour contrôler le débit et/ou la pression de fluide admis à circuler selon la position de l'organe 5 de commande par rapport au corps du robinet. L'organe 5 de commande comprend par exemple un volant rotatif. Bien entendu, tout autre système approprié peut être envisagé (levier pivotant, commande digitale, commande sans fil via une télécommande...). Par exemple, l'organe 5 de commandes sélectionne un orifice calibré et/ou commande une vanne de restriction de débit en fonction de sa position parmi une pluralité de positions discrètes stables ou une pluralité de positions d'un déplacement continu. En particuliers les positions stables peuvent être référencées mécaniquement par un point dur (par exemple via un système d'encliquetage).

Le robinet 1 comprend un dispositif 6 électronique d'indication de donnée(s) relative(s) au contenu de fluide dans une bouteille 2 raccordée au robinet 1. Le dispositif peut être du type comprenant un organe 7 d'acquisition de stockage et de traitement de données et au moins un afficheur 8 de données relié à l'organe 7 d'acquisition de stockage et de traitement de données. L'organe 7 d'acquisition de stockage et de traitement de données comprend par exemple un calculateur et/ou un microprocesseur ou tout autre système équivalent.

Bien entendu, ce dispositif peut comporter un ou plusieurs organes de réception de données (par connexion filaire et/ou sans fil) ainsi que un ou plusieurs organes d'émission de données (par connexion filaire et/ou sans fil).

Le robinet 1 comporte un capteur 9 de position de l'organe 5 de commande manuelle de l'organe 4 de régulation. Le capteur 9 de position est relié à l'organe 7 d'acquisition de stockage et de traitement de données pour transmettre à ce dernier un signal représentatif du débit et/ou la pression de fluide imposé par l'organe 4 de régulation. Par exemple, le capteur 9 de position de l'organe 5 de commande comprend un convertisseur du déplacement mécanique de l'organe de commande en un signal électrique exploitable par l'organe 7 d'acquisition de stockage et de traitement de données.

Le détecteur est par exemple solidaire d'une partie fixe du robinet, ou respectivement de l'organe de commande, le détecteur fournissant un signal électrique ou numérique déterminé en fonction de la position de l'organe 5 de commande. Ce signal peut être fourni par voie filaire et/ou sans fil.

Le capteur 9 de position de l'organe 5 de commande peut comprendre par exemple au moins l'un parmi : un capteur capacitif, un capteur magnétique, un capteur mécanique, un capteur optique.

L'organe 5 de commande manuelle et/ou l'organe 4 de régulation peut être mobile selon une pluralité de positions discrètes (mécaniquement stables ou non) correspondant respectivement à des valeurs de débit et/ou la pression de fluide admis à passer de l'extrémité 13 amont vers l'extrémité aval (avec une graduation par exemple).

Comme illustré à la figure 2, le robinet comporte également un capteur 10 de pression destiné à mesurer la pression au sein du volume de stockage de la bouteille 2. Le capteur 10 de pression est relié à l'organe 7 d'acquisition de stockage et de traitement de données pour transmettre à ce dernier (par voie filaire et/ou sans fil) un signal représentatif de la pression de fluide mesurée, notamment en temps réel ou périodiquement. Le capteur 10 de pression peut être situé par exemple au niveau de l'extrémité amont du premier circuit 3 de soutirage et/ou au niveau d'un second 11 circuit de soutirage.

L'organe 7 d'acquisition de stockage et de traitement de données est configuré pour calculer et afficher sur l'afficheur 8 une information d'autonomie et/ou de contenu restant et/ou de débit soutiré.

De plus, l'organe 7 d'acquisition de stockage et de traitement de données peut être configuré, en réponse à la réception de ce signal de débit et/ou de pression imposé, pour commander l'affichage sur l'afficheur 8 d'une information relative du débit et/ou la pression de fluide imposé par l'organe 4 de régulation.

L'organe 7 d'acquisition de stockage et de traitement de données est ainsi être configuré pour recevoir à la fois le signal de pression P mesurée du capteur 10 de pression et le signal de débit et/ou de pression D fourni par le capteur 9 de position. L'organe 7 d'acquisition de stockage et de traitement de données peut ainsi être programmé pour calculer une information d'autonomie de fluide restant ou de débit soutiré à partir de ces deux informations.

L'autonomie théorique de fluide restant est déterminée par exemple en calculant, à partir de la pression initiale mesurée, la diminution temporelle théorique de pression ou de la quantité de gaz générée par le débit et/ou la pression D de soutirage imposé par l'organe 4 de régulation.

L'autonomie réelle de fluide restant peut être calculée uniquement sur la base des valeurs de pression mesurée par le capteur 10 de pression.

De plus, de préférence, l'organe 7 d'acquisition de stockage et de traitement de données est configuré pour :
- calculer la variation de quantité ou de pression du fluide réelle mesurée par le capteur 10 de pression,
- calculer la variation de quantité ou de pression de fluide théorique imposée par l'organe 4 de régulation,
- comparer la variation de quantité ou de pression réelle mesurée par le capteur 10 de pression avec la variation de quantité ou de pression théorique imposée par l'organe 4 de régulation et
- générer un signal d'alerte en cas de divergence entre ces dernières supérieure à un seuil de sécurité déterminé (par exemple une divergence de 15 à 30% et notamment 25%).

Ces variations de quantité/pression mesurées peuvent le cas échéant servir à calculer le débit de gaz réellement soutiré.

L'information théorique d'autonomie ou de contenu de fluide restant dans la bouteille 2 peut être exprimée en temps restant (respectivement en quantité restante) en divisant la pression initiale mesurée par le capteur 10 de pression (ou respectivement, une quantité du gaz courante), par la variation de pression théorique imposée par l'organe 4 de régulation (respectivement la variation de quantité imposée par l'organe 4 de régulation), selon une formule par exemple du type : Temps restant=Pression initiale/variation de pression imposée (ou respectivement : Temps restant= Contenu de fluide restant/variation de quantité imposée).

De la même façon, l'information réelle d'autonomie peut être exprimée en temps restant (respectivement en quantité restante) en divisant la pression initiale mesurée par le capteur 10 de pression (ou respectivement, une quantité du gaz courante), par la variation de pression réelle mesurée par le capteur 10 de pression (respectivement la variation de quantité calculée à partir de la pression P mesurée), selon une formule par exemple du type : Temps restant=Pression initiale/variation de pression réelle (ou respectivement : Temps restant= Contenu de fluide restant/variation de quantité mesurée).

Les variations de quantité ou de pression théoriques peuvent être calculées par exemple via l'équation des gaz parfait PV=nRT ou réels PV= ZnRT (unités S.I.), avec P la pression mesurée, V le volume connu de la bouteille, n la quantité, R la constante des gaz parfaits et T la température mesurée ou approximée à la température ambiante mesurée, Z le facteur de compressibilité supposé connu (table ou calcul). De même les conversions entre pression et quantité peuvent être calculées via l'équation des gaz parfait ou toute autre formule équivalente, le volume de la bouteille 2 étant connu et renseigné dans le l'organe 7 d'acquisition de stockage et de traitement de données et la température peut être mesurée par un capteur extérieur ambiant ou calculée ou renseignée ou approximée

Le dispositif comporte de préférence un capteur de température interne ou externe à la bouteille pour corriger le calcul d'autonomie.

L'organe 7 d'acquisition de stockage et de traitement de données peut être configuré pour calculer une information d'autonomie ou de contenu de fluide sur un intervalle de temps déterminé compris entre quinze secondes et dix minutes et de préférence entre trente secondes et cinq minutes, à partir du signal de pression mesuré par le capteur 10 de pression.

L'organe 7 d'acquisition de stockage et de traitement de données est configuré de préférence pour comparer périodiquement cette information d'autonomie calculée sur la base du signal de pression P mesuré par rapport à l'information d'autonomie théorique calculée à partir de la variation de quantité ou de pression imposée par l'organe 4 de régulation.

La mesure dynamique de pression peut permettre de réajuster si besoin plus précisément l'affichage du débit effectif soutiré et/ou l'autonomie affichée.

Le cas échant un signal d'alerte (visuel et/ou sonore et/ou sans fil) peut être émis en cas de divergence ou d'anomalie.

De même, l'organe 7 d'acquisition de stockage et de traitement de données peut être configuré pour recalculer et éventuellement afficher automatiquement une mise à jour de l'information d'autonomie, de contenu ou de débit de fluide à la réception d'un signal du capteur 9 de position indiquant un changement débit et/ou la pression de fluide imposé par l'organe 4 de régulation via l'organe 5 de commande.

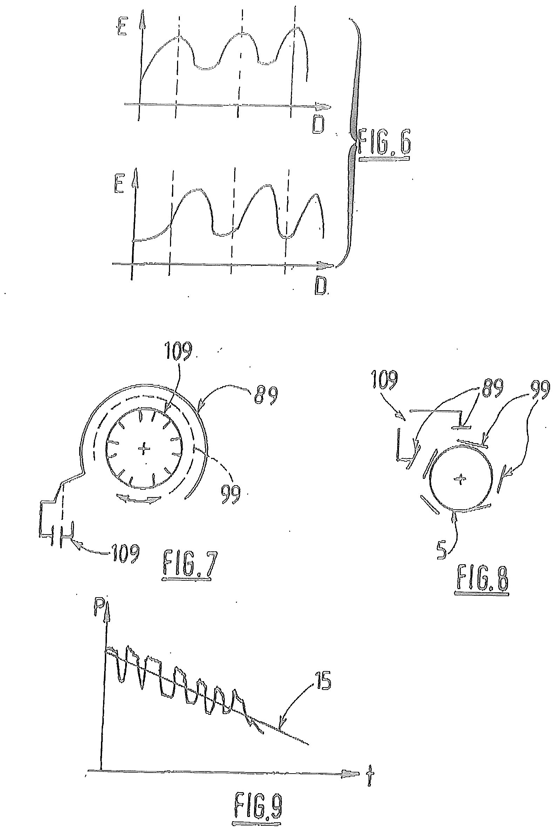

Cette information mise à jour (notamment le résultat du nouveau calcul d'autonomie) peut être affichée soit de manière régulière et automatique, par exemple toutes les 5 minutes à 20 minutes (même si la différence est faible), soit n'est affichée que lorsque la différence est relativement importante (par exemple au moins 5% ou au moins 15% d'écart. Pour calculer l'autonomie restante en gaz à partir d'un tel signal, l'organe 7 d'acquisition de stockage et de traitement de données peut être configuré pour mesurer la chute de pression sur les optimums pour en déduire la pente de décroissance équivalente (cf. référence 15 à la figure 9). Alternativement ou cumulativement, l'organe 7 d'acquisition de stockage et de traitement de données peut être configuré pour faire une moyenne de baisse de pression sur un temps relativement long (plusieurs minutes par exemple dix minutes) de façon à effacer les imprécisions d'image.

De préférence l'organe 5 de commande manuelle de l'organe 4 de régulation est déplaçable dans une position dite « de fermeture » correspondant une fermeture du premier circuit 3 de soutirage. C'est-à-dire que le débit de fluide admis à passer de l'extrémité 13 amont vers l'extrémité aval 23 est nul. Dans le cas où l'organe 5 de commande manuelle est dans sa position de fermeture et que la variation du signal représentatif de la pression de fluide au sein d'une bouteille 2 est inférieure à un seuil de variation déterminé (par exemple équivalent à une chute de pression de 10 mbar / min (0,05l/min) mesuré par le capteur 10 de pression), l'organe 7 d'acquisition de stockage et de traitement de données est configuré de préférence pour commander l'affichage sur l'afficheur 8 d'une information fixe relative à la pression et/ou la quantité de fluide dans la bouteille 2.

C'est-à-dire que le dispositif détecte que la bouteille 12 n'est pas soutirée et affiche par exemple une information relative à son contenu.

Comme illustré à la figure 1, le robinet 1 peut comprendre un second circuit 11 de soutirage, par exemple distinct du premier circuit 3 de soutirage et qui évite l'organe 4 de régulation du débit et/ou la pression du premier circuit de soutirage 3.

Ce second circuit 11 de soutirage peut le cas échéant posséder une portion commune avec le premier circuit 3 de soutirage.

Ce second circuit 11 de soutirage est par exemple prévu pour fournir un gaz à une pression régulée (via un détendeur 14 de pression). Par exemple, le second circuit 11 de soutirage fournit une pression f réglable ou fixe et de l'ordre de trois à dix bar à un appareil utilisateur. Par exemple le second circuit 11 de soutirage possède un raccord de sortie 101 (par exemple via une prise crantée) pouvant être relié à un ventilateur médical pour fournir de l'oxygène à ce dernier.

Ce second circuit 11 de soutirage peut alimenter à gaz de la bouteille 2 indépendamment du premier circuit 3 de soutirage. Ainsi, lorsque l'organe 5 de commande manuelle est dans sa position de fermeture et que la variation du signal représentatif de la pression de fluide au sein d'une bouteille 2 (mesuré par le capteur 10 de pression) est supérieure à un seuil de variation déterminé (par exemple 25mbar par minute, l'organe 7 d'acquisition de stockage et de traitement de données peut détecter un soutirage de fluide via le second circuit 11 de soutirage ou, si ce second circuit 11 de soutirage n'est pas utilisé, une éventuelle fuite de fluide.

L'organe 7 d'acquisition de stockage et de traitement de données peut le cas échéant commander l'affichage sur l'afficheur 8 ou l'envoi (sans fil, par voie filaire ou par voie sonore) d'une information relative à un soutirage via le second circuit 11 de soutirage et ou relative à une fuite (signal d'alerte).

En particulier, lorsque l'organe 5 de commande manuelle est dans sa position dite de fermeture et que la variation du signal représentatif de la pression de fluide au sein d'une bouteille est supérieure à un seuil de variation déterminé (par exemple 25 mbar par minute), l'organe 7 d'acquisition de stockage et de traitement de données est configuré pour détecter au moins une caractéristique de l'allure de la variation de pression de fluide dans la bouteille du fait du soutirage via le second circuit de soutirage 11.

La au moins une caractéristique comprend par exemple: un caractère périodique de la variation de pression ou de quantité, la fréquence de la variation de pression ou de quantité, le niveau de variation de pression ou de quantité,...

Comme illustré schématiquement à la figure 9, ceci permet de détecter au bout de deux à trois oscillations de pression instantanément par exemple un soutirage périodique correspondant à une alimentation en gaz d'un ventilateur respiratoire. En effet, même si le gaz soutiré ne passe pas par le régulateur 4 de débit, le débit est régulé directement par un ventilateur et dépend de la respiration du patient. Ce débit ainsi délivré n'est pas constant mais oscille dans le temps (selon la respiration du patient).

L'organe 7 d'acquisition de stockage et de traitement de données peut être configuré pour détecter (reconnaître) une chute de pression caractéristique d'une ventilation selon le principe suivant :
- mesure du signal de pression de façon périodique rapprochée (par exemple toutes les 0,5 à deux secondes, notamment toutes les secondes),
- identification d'un signal de type créneau ayant une fréquence de cinq à vingt-cinq créneaux (respirations) par minute).

Dans le cas où ce signal de pression ne correspond pas à un signal de ventilation (par exemple une variation décroissante continue), l'organe 7 d'acquisition de stockage et de traitement de données peut déterminer qu'il s'agit d'une fuite ou d'une utilisation incorrecte du gaz et peut le signaler de la même façon.

Selon une particularité avantageuse, lorsque l'organe 5 de commande manuelle est disposé dans une position intermédiaire entre deux valeurs adjacentes respectives de débit et/ou la pression de fluide admis à passer de l'extrémité 13 amont vers l'extrémité aval 23, l'organe 7 d'acquisition de stockage et de traitement de données est configuré pour sélectionner et afficher sur l'afficheur 8 l'une ou les deux de ces valeurs adjacentes ou une valeur intermédiaire entre ces deux valeurs adjacentes ou aucune valeur chiffrée.

De même, l'une de ces deux valeurs adjacentes ou une valeur intermédiaire entre ces deux valeurs adjacentes peut être utilisée pour le calcul théorique d'une valeur de débit soutiré ou quantité restante tel que décrit ci-dessus.

De préférence, l'organe 7 d'acquisition de stockage et de traitement de données affiche et/ou signale (transmission à distance sans fil ou avec fil ou de façon sonore) la valeur la plus critique ou la plus défavorable pour l'utilisateur.

Ceci permet d'alerter ergonomiquement l'utilisateur d'une manipulation erronée en affichant une information pertinente mais pénalisante l'obligeant à corriger sa sélection.

Par exemple, lorsque l'organe 5 de commande manuelle est disposé dans une position intermédiaire entre deux valeurs adjacentes respectives de débit, l'organe 7 d'acquisition de stockage et de traitement de données est configuré pour calculer et afficher sur l'afficheur 8 une information d'autonomie ou de contenu de fluide restant dans la bouteille sur la base de la valeur la plus élevée des deux valeurs adjacentes.

Ainsi si par exemple l'utilisateur positionne l'organe 5 de commande entre les positions n litre par minute et n+1 litre par minute (n étant un nombre entier), l'organe 7 d'acquisition de stockage et de traitement de données peut être configuré pour calculer une autonomie basée sur la valeur de débit soutiré de n+1 litre par minute (autonomie moindre que si elle avait été calculée avec la valeur de n litre par minute).

De même, lorsque l'organe 5 de commande manuelle est disposé dans une position intermédiaire entre deux valeurs adjacentes respectives de débit, l'organe 7 d'acquisition de stockage et de traitement de données peut être configuré pour afficher sur l'afficheur 8 une information relative au débit soutiré imposé par l'organe 4 de régulation correspondant à la valeur la plus basse des deux valeurs adjacentes. Ainsi si par exemple l'utilisateur positionne l'organe 5 de commande entre les positions n litre par minute et n+1 litre par minute (n étant un nombre entier), l'organe 7 d'acquisition de stockage et de traitement de données peut être configuré pour afficher sur l'afficheur 8 une information basée sur la valeur de débit soutiré de n litre par minute (débit le plus faible qui peut par exemple être en-dessous de la prescription médicale). Ceci, en plus ou à la place d'une alarme, fera réagir l'utilisateur en vue de corriger la sélection de débit. En variante, une plage de valeurs est affichée (intervalle de valeurs dont les extrémités correspondent à ces deux valeurs adjacentes. Exemple « débit entre n et n+1 litres par minute »). En variante, l'organe 7 d'acquisition de stockage et de traitement de données retire l'affichage de tout ou partie des informations. Cette dernière solution aura encore plus d'effet sur l'utilisateur.

Le dispositif peut être configuré pour dans ce cas délivrer un débit de fluide correspondant à l'une des deux valeurs adjacentes, notamment la valeur affichée.

De préférence, lorsque l'organe 5 de commande manuelle est disposé dans une position intermédiaire entre deux valeurs adjacentes respectives de débit et/ou la pression de fluide admis à passer de l'extrémité 13 amont vers l'extrémité aval 23, l'organe 4 de régulation est conformé pour autoriser le soutirage d'un débit de fluide non nul compris entre lesdites deux valeurs adjacentes respectives de débit et/ou la pression, notamment la valeur affichée.

Alternativement, lorsque l'organe 5 de commande manuelle est disposé dans une position intermédiaire entre deux valeurs adjacentes respectives de débit et/ou la pression de fluide admis à passer de l'extrémité 13 amont vers l'extrémité aval 23, l'organe 4 de régulation est conformé pour autoriser le soutirage d'un débit de fluide égal à l'une lesdites deux valeurs adjacentes respectives de débit et/ou la pression.

De plus, dans le cas ou l'organe 4 de régulation permet de faire varier de façon continue (non discrète) le débit ou la pression, l'organe 7 d'acquisition de stockage et de traitement de données peut être configuré pour afficher la valeur précise de débit sélectionnée.

Comme illustré à la figure 3, le capteur 9 de position de l'organe 5 de commande peut comprendre par exemple comprend un mécanisme 19 engrenant avec l'organe 5 de commande (un système à engrenage et/ou crantage) et un potentiomètre 39. Le mécanisme comporte une pièce mobile 29 (par exemple une roue ou une tige ou une crémaillère) formant un curseur du potentiomètre 39. De cette façon, le capteur 9 de position fournit une valeur de tension et/ou de résistance déterminée en fonction de la position de l'organe 5 de commande.

Dans l'exemple de la figure 4, le capteur 9 de position de l'organe 5 de commande comprend un mécanisme engrenant avec l'organe 5 de commande comprenant un codeur optique et/ou numérique 49, par exemple un codeur à fils (fils conducteur et un fil de masse). Le codeur 49 fournit un signal numérique déterminé en fonction de la position de l'organe 5 de commande. Selon la position du mécanisme, un ou plusieurs fils sont sous tension ou court-circuités formant une pluralité de signaux distincts pour caractériser différentes positions (par exemple 2ⁿ⁻¹ pour un système à n fils).

Comme illustré à la figure 5, le capteur 9 de position de l'organe 5 de commande peut comprendre un système magnétique comportant au moins un aimant 59 solidaire de l'organe 5 de commande et au moins un détecteur 69, 79 de champ magnétique du au moins un aimant 59. En cas de déplacement (tel qu'une rotation) de l'organe 5 de commande, un détecteur 69 détecte par exemple un champ magnétique E en fonction du déplacement D qui oscille et permet de caractériser une pluralité de positions (cf. figure 6). Lorsque le dispositif comprend un second détecteur 79 (ou plus), plusieurs signaux distincts peuvent être exploités simultanément pour améliorer la détection des positions distinctes.

Comme illustré aux figures 7 et 8, le capteur 9 de position de l'organe 5 de commande peut comprendre un système capacitif mesurant 109 une capacité électrique entre une référence fixe 89 magnétique et une partie mobile 99 liée à l'organe 5 de commande

Tous ces systèmes présentent l'avantage d'une détection fiable sans nécessiter de prévoir de fils électriques associés à une partie mobile du mécanisme.

Le système à potentiomètre et plus généralement chaque système de détection peut être calibré facilement en fabrication.

Ainsi, dans ce cas, la détection simultanée de la position de fermeture (graduation « 0 » = « zéro » par exemple) sur le détecteur 5 de position et d'une chute de pression, il est ainsi possible de détecter instantanément et automatiquement le mode d'utilisation de la bouteille 2. Un algorithme de calcul d'autonomie rapide (basé sur la position détectée de l'organe 5 de commande) décrit ci-après n'est pas utilisé, et seul un calcul d'autonomie adapté à ce mode de soutirage est réalisé sur la base de la mesure de pression P par le capteur 10 de pression.

Cet algorithme de calcul d'autonomie basé sur la mesure de pression 10 peut ainsi être automatiquement enclenché.

Ainsi, lorsque l'organe 5 de commande manuelle est dans sa position de fermeture et que la variation du signal représentatif de la pression de fluide au sein d'une bouteille 2 est supérieure à un seuil de variation déterminé, l'organe 7 d'acquisition de stockage et de traitement de données peut être configuré pour calculer une information d'autonomie de fluide restant à partir de la seule mesure du signal de pression initiale et de la variation de ce signal de pression donné par le capteur 10 de pression. L'organe 7 d'acquisition de stockage et de traitement de données peut notamment être configuré pour commander l'affichage sur l'afficheur 8 de cette information d'autonomie calculée et/ou une information relative à la pression ou la quantité initiale de fluide dans la bouteille 2.

De plus, l'organe 7 d'acquisition de stockage et de traitement de données peut être configuré pour comporter une fonction de sceau garantie indiquant que la bouteille 2 n'a pas été utilisée suite à un remplissage. Ainsi, avant un premier soutirage, l'organe 7 d'acquisition de stockage et de traitement de données peut commander l'affichage sur l'afficheur 8 d'une information fixe relative au contenu de fluide dans la bouteille 2 (et/ou l'information du type « bouteille pleine ») tant que le capteur 9 de position n'a pas transmis un signal représentatif d'un débit et/ou la pression de fluide soutiré du réservoir 2 pendant une durée déterminée et/ou correspondant à une quantité déterminée de fluide (par exemple 20 litres de gaz soutiré). Cette détection peut être assurée ou complétée par l'information donnée par le capteur 10 de pression.

Bien que l'invention soit relativement simple et peu coûteuse on conçoit aisément qu'elle permet d'afficher plus rapidement des informations de débit et d'autonomie.

L'invention s'applique avantageusement aux bouteilles de gaz sous pression, notamment aux bouteilles contenant de l'oxygène sous pression.

## Revendications

1. Robinet pour bouteille de fluide sous pression comprenant un corps muni d'une extrémité destinée à être montée dans l'orifice d'une bouteille de fluide sous pression, le corps du robinet (1) abritant un premier circuit (3) de soutirage comprenant une première extrémité (13) amont destinée à communiquer le volume de stockage d'une bouteille de fluide sous pression et une seconde extrémité (23) aval destinée à être raccordée à un organe utilisateur du gaz soutiré, le premier circuit (3) de soutirage comprenant un organe (4) de régulation du débit et/ou de la pression du fluide soutiré entre les extrémités amont (13) et aval (23), le robinet (1) comprenant un organe (5) de commande manuelle de l'organe (4) de régulation, l'organe (5) de commande étant monté mobile relativement au corps du robinet (1) et coopérant avec l'organe (4) de régulation pour contrôler le débit et/ou la pression de fluide admis à circuler de l'extrémité (13) amont vers l'extrémité aval (23) selon la position de l'organe (5) de commande par rapport au corps (5), le robinet (1) comprenant un dispositif (6) électronique d'indication de donnée(s) relative(s) au contenu de fluide dans une bouteille raccordée au robinet (1), le dispositif (6) électronique d'indication comprenant un organe (7) d'acquisition de stockage et de traitement de données et au moins un afficheur (8) de données relié à l'organe (7) d'acquisition de stockage et de traitement de données, le robinet (1) comportant un capteur (9) de position de l'organe (5) de commande manuelle de l'organe (4) de régulation, le capteur (9) de position étant relié à l'organe (7) d'acquisition de stockage et de traitement de données pour transmettre à ce dernier un signal représentatif du débit et/ou la pression de fluide imposé par l'organe (4) de régulation, l'organe (7) d'acquisition de stockage et de traitement de données étant configuré, en réponse à la réception de ce signal de débit et/ou de pression imposé, pour commander l'affichage sur l'afficheur (8) d'une information relative au mode d'utilisation du robinet et en particulier au contenu de fluide et/ou à la quantité de fluide soutiré, le robinet comportant un capteur (10) de pression destiné à mesurer la pression au sein du volume de stockage d'une bouteille (2) de fluide raccordée au robinet (1), le capteur (10) de pression étant relié à l'organe (7) d'acquisition de stockage et de traitement de données pour transmettre à ce dernier un signal représentatif de la pression de fluide mesurée, l'organe (7) d'acquisition de stockage et de traitement de données étant configuré pour recevoir à la fois le signal de pression (P) mesurée du capteur (10) de pression et le signal de débit et/ou de pression (D) fourni par le capteur (9) de position **caractérisé en ce que** l'organe (7) d'acquisition de stockage et de traitement de donnés est configuré pour calculer, en réponse, une valeur de quantité de fluide restante et/ou soutirée à partir de ces deux signaux, l'organe (7) d'acquisition de stockage et de traitement de données étant configuré pour :
- calculer une valeur de quantité de fluide restante et/ou soutirée réelle sur la base de la mesure de pression du capteur (10) de pression,
- calculer une valeur de quantité de fluide restante et/ou soutirée théorique sur la base de la régulation imposée par l'organe (4) de régulation et mesurée par la position de l'organe (5) de commande,
- comparer ladite valeur réelle basée sur la mesure du capteur (10) de pression avec la valeur théorique imposée par l'organe (4) de régulation et,
- générer un signal d'alerte en cas de divergence entre ces valeur réelle et théorique supérieure à un seuil de sécurité déterminé.

2. Robinet selon la revendication 1, **caractérisé en ce que** la valeur de quantité de fluide restante et/ou soutirée comprend au moins l'une parmi : la pression du fluide, la quantité massique ou volumique de fluide, l'autonomie de fluide restante dans la bouteille, la variation de quantité ou de pression de fluide dans la bouteille, le débit de fluide soutiré, l'autonomie de fluide restant en quantité, l'autonomie temporelle de fluide restant à un débit de soutirage déterminée.

3. Robinet selon la revendication 1 ou 2, **caractérisé en ce que** le seuil de sécurité correspond à une divergence de 15 à 35% et de préférence de 25% entre les valeurs réelle et théorique.

4. Robinet selon l'une quelconque des revendications 1 à 3, **caractérisé en ce que** l'organe (7) d'acquisition de stockage et de traitement de données est configuré pour calculer l'autonomie théorique de fluide restant à partir de la pression initiale mesurée, de la diminution temporelle théorique de pression ou de la quantité de gaz générée par le débit et/ou la pression (D) de soutirage imposé par l'organe (4) de régulation, et pour calculer l'autonomie réelle de fluide restant à partir de la pression initiale mesurée et de la diminution temporelle réelle de pression ou de la quantité de gaz mesurée par le capteur (10) de pression.

5. Robinet selon l'une quelconque des revendications 1 à 4, **caractérisé en ce que** l'organe (7) d'acquisition de stockage et de traitement de données est configuré pour calculer une information d'autonomie ou de contenu de fluide sur un intervalle de temps déterminé compris entre une seconde et dix minutes et de préférence entre deux secondes et une minute, à partir de la pression courante et de la diminution temporelle théorique de pression ou de la quantité de gaz imposée par l'organe (4) de régulation.

6. Robinet selon l'une quelconque des revendications 1 à 5, **caractérisé en ce que** l'organe (7) d'acquisition de stockage et de traitement de données est configuré pour calculer une valeur d'autonomie ou de contenu de fluide sur un intervalle de temps déterminé compris entre trente secondes et dix minutes et de préférence entre une minute et six minutes à partir du signal de pression mesuré par le capteur (10) de pression.

7. Robinet selon l'une quelconque des revendications 1 à 6, **caractérisé en ce que** l'organe (7) d'acquisition de stockage et de traitement de données est configuré pour relever la pression mesurée par le capteur (10) de pression pendant une durée comprise entre 1ms (milliseconde) et 100ms toutes les 5s (seconde) à 60s

8. Robinet selon l'une quelconque des revendications 1 à 7, **caractérisé en ce que** l'organe (7) d'acquisition de stockage et de traitement de données est configuré pour relever la position de l'organe (5) de commande manuelle mesurée par le capteur (9) de position pendant une durée comprise entre 1ms et 50 ms, toutes les 1 à 20 secondes.

9. Robinet selon l'une quelconque des revendications 5 à 6, **caractérisé en ce que** la valeur d'autonomie ou de contenu théorique de fluide restant dans la bouteille est exprimée en temps restant (respectivement en quantité restante) en divisant la pression initiale mesurée par le capteur (10) de pression (ou respectivement, une quantité du gaz courante), par la variation de pression théorique imposée par l'organe (4) de régulation (respectivement la variation de quantité imposée par l'organe (4) de régulation), selon une formule du type : Temps restant=Pression initiale/variation de pression imposée (ou respectivement : Temps restant=quantité restante/variation de quantité imposée), la quantité étant estimée via l'équation des gaz parfait (PV=nRT) ou réels (PV=nZRT) (unités S.I.), avec P la pression mesurée, V le volume connu de la bouteille, n la quantité , R la constante des gaz parfaits et T la température mesurée ou approximée à la température ambiante mesurée, Z le facteur de compressibilité connu par tableau ou calculé.

10. Robinet selon l'une quelconque des revendications 5, 6 ou 9, **caractérisé en ce que** l'organe (7) d'acquisition de stockage et de traitement de données est configuré pour recalculer et éventuellement afficher automatiquement une mise à jour de la valeur d'autonomie ou de contenu de fluide à la réception d'un signal du capteur (9) de position indiquant un changement débit et/ou de la pression de fluide imposé par l'organe (4) de régulation via l'organe (5) de commande.

11. Robinet selon l'une quelconque des revendications 1 à 10, **caractérisé en ce que** le capteur (9) de position de l'organe (5) de commande comprend au moins l'un parmi : un capteur capacitif, un capteur magnétique, un capteur mécanique.

12. Bouteille de fluide sous pression **caractérisé en ce qu'**elle comprend un robinet selon l'une quelconque des revendications 1 à 11.

13. Bouteille selon la revendication 12 **caractérisée en ce que** après un remplissage de la bouteille et avant un premier soutirage, l'organe (7) d'acquisition de stockage et de traitement de données est configuré pour commander l'affichage sur l'afficheur (8) d'une information fixe relative au contenu de fluide dans la bouteille tant que le capteur (9) de position n'a pas transmis un signal représentatif d'un débit et/ou la pression de fluide soutiré du réservoir (2) pendant une durée déterminée et/ou correspondant à une quantité déterminée de fluide.

## Patentansprüche

1. Hahn für einen unter Druck stehenden Fluidzylinder mit einem Körper, der mit einem Ende versehen ist, das zur Montage in der Öffnung eines unter Druck stehenden Fluidzylinders bestimmt ist, wobei der Hahnkörper (1) einen ersten Entnahmekreislauf (3) mit einem ersten stromaufwärtigen Ende (13) enthält, das zum Kommunizieren des Speichervolumens eines unter Druck stehenden Fluidzylinders bestimmt ist, und einem zweiten stromabwärtigen Ende (23), das zum Verbinden mit einem Benutzerelement des entnommenen Gases bestimmt ist, wobei der erste Entnahmekreislauf (3) ein Element (4) zum Regulieren des Durchflusses und/oder des Drucks des entnommenen Fluids zwischen dem stromaufwärtigen (13) und dem stromabwärtigen Ende (23) umfasst, wobei der Hahn (1) ein manuelles Steuerelement (5) des Regulierelements (4) umfasst, wobei das Steuerelement (5) relativ zu dem Hahnkörper (1) beweglich montiert ist und mit dem Regulierelement (4) zusammenwirkt, um den Durchfluss und/oder den Druck des Fluids zu steuern, das vom stromaufwärtigen Ende (13) zum stromabwärtigen Ende (23) gemäß der Position des Steuerelements (5) bezüglich des Körper (5) zugeführt wird, wobei der Hahn (1) eine elektronische Vorrichtung (6) zum Anzeigen von Daten in Bezug auf den Fluidgehalt in einem mit dem Hahn (1) verbundenen Zylinder umfasst, wobei die elektronische Anzeigevorrichtung (6) ein Erfassungselement zur Datenspeicherung undverarbeitung (7) und mindestens eine mit dem Erfassungselement zur Datenspeicherung und -verarbeitung (7) verbundene Datenanzeige (8) umfasst, wobei das Hahn (1) einen Positionssensor (9) für das manuelle Steuerelement (5) des Regulierelements (4) umfasst, wobei der Positionssensor (9) mit dem Erfassungselement zur Datenspeicherung und -verarbeitung (7) verbunden ist, um an das Letztere ein Signal zu übertragen, das für den von dem Regulierelement (4) auferlegten Fluiddurchfluss und/oder -druck repräsentativ ist, wobei das Erfassungselement zur Datenspeicherung und -verarbeitung (7) als Reaktion auf den Empfang dieses auferlegten Durchfluss- und/oder Drucksignals konfiguriert ist, um die Anzeige auf der Anzeigevorrichtung (8) einer Information bezüglich der Verwendungsart des Hahns und insbesondere des Fluidgehalts und/oder der Menge des entnommenen Fluids zu steuern, wobei der Hahn einen Drucksensor (10) zum Messen des Drucks innerhalb des Speichervolumens eines mit dem Hahn (1) verbundenen Fluidzylinders (2) umfasst, wobei der Drucksensor (10) mit dem Erfassungselement zur Datenspeicherung und -verarbeitung (7) verbunden ist, um an das Letztere ein für den gemessenen Fluiddruck repräsentatives Signal zu übertragen, wobei das Erfassungselement zur Datenspeicherung und -verarbeitung (7) so konfiguriert ist, dass es sowohl das Signal des gemessenen Drucks (P) des Drucksensors (10) als auch das von dem Positionssensor (9) gelieferte Durchfluss- und/oder Drucksignal (D) empfängt, **dadurch gekennzeichnet, dass** das Erfassungselement zur Datenspeicherung und -verarbeitung (7) so konfiguriert ist, dass es als Reaktion aus diesen beiden Signalen einen Wert der verbleibenden und/oder entnommenen Fluidmenge berechnet, wobei das Erfassungselement zur Datenspeicherung und -verarbeitung (7) konfiguriert ist zum:
- Berechnen eines Istwertes der verbleibenden und/oder entnommenen Fluidmenge auf der Basis der Druckmessung des Drucksensors (10),
- Berechnen eines Sollwertes der verbleibenden und/oder entnommenen Fluidmenge auf der Basis der vom Regulierelement (4) auferlegten und durch die Position des Steuerelements (5) gemessenen Regulierung,
- Vergleichen des Istwertes basierend auf der Messung des Drucksensors (10) mit dem durch das Regulierelement (4) auferlegten Sollwert und,
- Generieren eines Alarmsignals bei einer Divergenz zwischen diesen Ist- und Sollwerten oberhalb einer vorgegebenen Sicherheitsschwelle.

2. Hahn nach Anspruch 1, **dadurch gekennzeichnet, dass** der Wert der verbleibenden und/oder entnommenen Fluidmenge mindestens eines aus Folgendem umfasst: dem Fluiddruck, der Massen- oder Volumenmenge des Fluids, der in dem Zylinder verbleibenden Fluidautonomie, der Änderung von Menge oder Druck des Fluids in dem Zylinder, dem entnommenen Fluiddurchfluss, der mengenmäßig verbleibenden Fluidautonomie, der zeitlichen Autonomie des verbleibenden Fluids bei einem vorgegebenen Entnahmedurchfluss.

3. Hahn nach Anspruch 1 oder 2, **dadurch gekennzeichnet, dass** die Sicherheitsschwelle einer Divergenz von 15 bis 35% und vorzugsweise von 25% zwischen dem Ist- und dem Sollwert entspricht.

4. Hahn nach einem der Ansprüche 1 bis 3, **dadurch gekennzeichnet, dass** das Erfassungselement zur Datenspeicherung und -verarbeitung (7) konfiguriert ist, um die theoretische Autonomie des verbleibenden Fluids aus dem gemessenen Anfangsdruck, dem theoretischen zeitlichen Abfall des Drucks oder der Gasmenge, erzeugt durch den Durchfluss und/oder den vom Regulierelement (4) auferlegten Entnahmedruck (D), zu berechnen, und um die tatsächliche Autonomie des verbleibenden Fluids aus dem gemessenen Anfangsdruck und dem vom Drucksensor (10) gemessenen tatsächlichen zeitlichen Abfall des Drucks oder der Gasmenge zu berechnen.

5. Hahn nach einem der Ansprüche 1 bis 4, **dadurch gekennzeichnet, dass** das Erfassungselement (7) zur Datenspeicherung und -verarbeitung konfiguriert ist, um eine Information von Fluidautonomie und -gehalt über ein vorgegebenes Zeitintervall zwischen einer Sekunde und zehn Minuten und vorzugsweise zwischen zwei Sekunden und einer Minute aus dem aktuellen Druck und dem theoretischen zeitlichen Abfall des Drucks oder der vom Regulierelement (4) auferlegten Gasmenge zu berechnen.

6. Hahn nach einem der Ansprüche 1 bis 5, **dadurch gekennzeichnet, dass** das Erfassungselement zur Datenspeicherung und -verarbeitung (7) konfiguriert ist, um aus dem vom Drucksensor (10) gemessenen Drucksignal einen Wert für Fluidautonomie oder -gehalt über ein vorgegebenes Zeitintervall zwischen dreißig Sekunden und zehn Minuten und vorzugsweise zwischen einer Minute und sechs Minuten zu berechnen.

7. Hahn nach einem der Ansprüche 1 bis 6, **dadurch gekennzeichnet, dass** das Erfassungselement zur Datenspeicherung und -verarbeitung (7) konfiguriert ist, um den vom Drucksensor (10) gemessenen Druck für eine Dauer zwischen 1 ms (Millisekunde) und 100 ms alle 5 s (Sekunde) bis 60 s zu ermitteln.

8. Hahn nach einem der Ansprüche 1 bis 7, **dadurch gekennzeichnet, dass** das Erfassungselement zur Datenspeicherung und -verarbeitung (7) konfiguriert ist, um die vom Positionssensor (9) gemessene Position des manuellen Steuerelements (5) für eine Dauer zwischen 1 ms und 50 ms alle 1 bis 20 Sekunden zu ermitteln.

9. Hahn nach einem der Ansprüche 5 bis 6, **dadurch gekennzeichnet, dass** der theoretische Wert für Autonomie und Gehalt des verbleibenden Fluids im Zylinder in Restzeit (bzw. in Restmenge) ausgedrückt wird, indem der vom Drucksensor (10) gemessene Anfangsdruck (bzw. eine aktuelle Menge des Gases) durch die vom Regulierelement (4) auferlegte theoretische Druckänderung (bzw. die vom Regulierelement (4) auferlegte Mengenänderung) dividiert wird gemäß einer Formel vom Typ: Restzeit = Anfangsdruck/auferlegte Druckänderung (bzw.: Restzeit=Restmenge/auferlegte Mengenänderung), wobei die Menge über die Gleichung des idealen (PV=nRT) oder tatsächlichen (PV=nZRT) Gases (Einheiten S.I.) geschätzt wird, mit P für den gemessenen Druck, V für das bekannte Zylindervolumen, n für die Menge, R für die Konstante des idealen Gases und T für die gemessene Temperatur oder näherungsweise gemessene Umgebungstemperatur, Z für den mittels Tabelle bekannten oder berechneten Kompressibilitätsfaktor.

10. Hahn nach einem der Ansprüche 5, 6 oder 9, **dadurch gekennzeichnet, dass** das Erfassungselement zur Datenspeicherung und -verarbeitung (7) konfiguriert ist, um bei Empfang eines Signals des Positionssensors (9), das eine von dem Regulierelement (4) über das Steuerelement (5) auferlegte Änderung des Fluiddurchflusses und/oder -drucks anzeigt, eine Aktualisierung des Wertes für Fluidautonomie oder -gehalt neu zu berechnen und gegebenenfalls automatisch anzuzeigen.

11. Hahn nach einem der Ansprüche 1 bis 10, **dadurch gekennzeichnet, dass** der Positionssensor (9) des Steuerelementes (5) mindestens eines aus Folgendem umfasst: einen kapazitiven Sensor, einen magnetischen Sensor, einen mechanischen Sensor.

12. Unter Druck stehender Fluidzylinder, **dadurch gekennzeichnet, dass** er ein Hahn nach einem der Ansprüche 1 bis 11 umfasst.

13. Zylinder nach Anspruch 12, **dadurch gekennzeichnet, dass** nach dem Befüllen des Zylinders und vor einer ersten Entnahme das Erfassungselement zur Datenspeicherung und -verarbeitung (7) konfiguriert ist, um die Anzeige auf der Anzeigevorrichtung (8) für eine feste Information bezüglich des Fluidgehalts in dem Zylinder zu steuern, solange der Positionssensor (9) kein Signal übertragen hat, das für einen Durchfluss und/oder den Druck des aus dem Behälter (2) während einer vorgegebenen Dauer und/oder entsprechend einer vorgegebenen Fluidmenge entnommenen Fluids repräsentativ ist.

## Claims

1. Tap for a pressurised fluid bottle, comprising a body equipped with an end intended to be mounted in the opening of a pressurised fluid bottle, the body of the tap (1) containing a first drawing-off circuit (3) comprising a first upstream end (13) intended to communicate the storage space of a pressurised fluid bottle and a second downstream end (23) intended to be connected to a member using the drawn-off gas, the first drawing-off circuit (3) comprising a member (4) for regulating the flow rate and/or pressure of the drawn-off fluid between the upstream (13) and downstream (23) ends, the tap (1) comprising a member (5) for manually controlling the regulation member (4), the control member (5) being mounted so as to be able to move relative to the body of the tap (1) and cooperating with the regulation member (4) in order to control the flow rate and/or pressure of the fluid allowed to flow from the upstream end (13) to the downstream end (23) according to the position of the control member (5) with respect to the body (5), the tap (1) comprising an electronic device (6) for indicating data relating to the fluid content in a bottle connected to the tap (1), the electronic indication device (6) comprising a member (7) for acquiring, storing and processing data and at least one data display (8) connected to the acquisition member (7) for storing and processing data, the tap (1) comprising a sensor (9) for the position of the member (5) for manually controlling the regulation member (4), the position sensor (9) being connected to the member (7) for acquiring, storing and processing data for transmitting to the latter a signal representing the flow rate and/or pressure of a fluid imposed by the regulation member (4), the member (7) for acquiring, storing and processing data being configured, in response to the reception of this imposed flow rate and/or pressure signal, to control the display on the display (8) of information relating to the mode of use of the tap and in particular to the fluid content and/or to the quantity of fluid drawn off, the tap comprising a pressure sensor (10) intended to measure the pressure in the storage space of a fluid bottle (2) connected to the tap (1), the pressure sensor (10) being connected to the member (7) for acquiring, storing and processing data and for transmitting to the latter a signal representing the measured fluid pressure, the member (7) for acquiring, storing and processing data being configured to receive both the measured pressure signal (P) from the pressure sensor (10) and the flow rate and/or pressure signal (D) provided by the position sensor (9), **characterised in that** the member (7) for acquiring, storing and processing data is configured to calculate, in response, the quantity of fluid remaining and/or drawn off from these two signals, the member (7) for acquiring, storing and processing data being configured:
- to calculate an actual value of the quantity of fluid remaining and/or drawn off based on the pressure measurement of the pressure sensor (10),
- to calculate a theoretical value of the quantity of fluid remaining and/or drawn off based on the regulation imposed by the regulation member (4) and measured by the position of the control member (5),
- to compare said actual value based on the measurement of the pressure sensor (10) with the theoretical value imposed by the regulation member (4), and
- to generate an alert signal in the event of divergence between these actual and theoretical values above a determined safety threshold.

2. Tap according to claim 1, **characterised in that** the value of the quantity of fluid remaining and/or drawn off comprises at least one from: the pressure of the fluid, the mass or volume quantity of fluid, the self-sufficiency of fluid remaining in the bottle, the variation in quantity or pressure of fluid in the bottle, the flow rate of fluid drawn off, the self-sufficiency of fluid remaining in terms of quantity, the self-sufficiency of fluid remaining in terms of time at a given drawing-off flow rate.

3. Tap according to claim 1 or 2, **characterised in that** the safety threshold corresponds to a divergence of 15% to 35% and preferably 25% between the actual and theoretical values.

4. Tap according to any of claims 1 to 3, **characterised in that** the member (7) for acquiring, storing and processing data is configured to calculate the theoretical amount of fluid remaining from the initial pressure measured, the theoretical reduction over time in the pressure or quantity of gas generated by the flow rate and/or the drawing-off pressure (D) imposed by the regulation member (4), and to calculate the actual amount of fluid remaining from the initial pressure measured and the actual reduction over time in the pressure and/or quantity of gas measured by the pressure sensor (10).

5. Tap according to any of claims 1 to 4, **characterised in that** the member (7) for acquiring, storing and processing data is configured to calculate fluid self-sufficiency or content information over a given interval of time lying between one second and ten minutes and preferably between two seconds and one minute, from the current pressure and the theoretical reduction over time in pressure or quantity of gas imposed by the regulation member (4).

6. Tap according to any of claims 1 to 5, **characterised in that** the member (7) for acquiring, storing and processing data is configured to calculate a fluid amount or content value over a given interval of time lying between thirty seconds and ten minutes and preferably between one minute and six minutes from the pressure signal measured by the pressure sensor (10).

7. Tap according to any of claims 1 to 6, **characterised in that** the member (7) for acquiring, storing and processing data is configured to record the pressure measured by the pressure sensor (10) for a period of between 1ms (millisecond) and 100ms every 5s (seconds) to 60s.

8. Tap according to any of claims 1 to 7, **characterised in that** the member (7) for acquiring, storing and processing data is configured to record the position of the manual control member (5) measured by the position sensor (9) for a period of between 1ms and 50ms, every 1 to 20 seconds.

9. Tap according to any of claims 5 to 6, **characterised in that** the theoretical self-sufficiency or content of fluid remaining in the bottle is expressed in terms of time remaining (or respectively in terms of quantity remaining) by dividing the initial pressure measured by the pressure sensor (10) (or respectively a current quantity of gas), by the theoretical variation in pressure imposed by the regulation member (4) (or respectively the variation in quantity imposed by the regulation member (4)), according to a formula of the type: remaining time = initial pressure/pressure variation imposed (or respectively: remaining time = remaining quantity/variation in quantity imposed), the quantity being estimated via the perfect gas equation (PV = nRT) or real gas equation (PV = nZRT) (S.I. units), with P the measured pressure, V the known volume of the bottle, n the quantity, R the perfect gas constant and T the temperature measured or approximated to the ambient temperature measured, Z the compressibility factor known by table or calculated.

10. Tap according to any of claims 5, 6 or 9, **characterised in that** the member (7) for acquiring, storing and processing data is configured to recalculate and optionally to automatically display an update of the fluid self-sufficiency or content on reception of a signal from the position sensor (9) indicating a change in flow rate and/or pressure of fluid imposed by the regulation member (4) via the control member (5).

11. Tap according to any of claims 1 to 10, **characterised in that** the position sensor (9) for the control member (5) comprises at least one from: a capacitive sensor, a magnetic sensor, a mechanical sensor.

12. Pressurised fluid bottle **characterised in that** it comprises a tap according to any of claims 1 to 11.

13. Bottle according to claim 12, **characterised in that**, after a filling of the bottle and before a first drawing-off, the member (7) for acquiring, storing and processing data is configured to control the display on the display (8) of fixed information relating to the fluid content in the bottle as long as the position sensor (9) has not transmitted a signal representing a flow rate and/or the pressure of fluid drawn off from the reservoir (2) for a given period and/or a period corresponding to a given quantity of fluid.
